# EUROPEAN PATENT APPLICATION

(11) **EP 1 353 204 A2**
(43) Date of publication of application: **15.10.2003**
(21) Application number: 03003243.7
(22) Date of filing: 21.02.2003
(51) Int. Cl.: G02B 6/255

(54) **Optical fiber component comprising an optical fiber having mode conversion portions**

(30) Priority: 12.04.2002 JP 2002110814; 22.04.2002 JP 2002119655
(71) Applicant: Sumitomo Electric Industries, Ltd., Osaka-shi, Osaka 541-0041 (JP)
(72) Inventor: Tamura, Mitsuaki, Yokohama Works, Yokohama-shi, Kanagawa 244-8588 (JP); Yamada, Eiichiro, Yokohama Works, Yokohama-shi, Kanagawa 244-8588 (JP)
(74) Representative: HOFFMANN - EITLE

(57) **Abstract**

This invention provides an optical fiber component (100,100A) or the like having a structure with a high degree of freedom in design as an intermediate member for optically connecting optical functional components (40) having different MFDs without increasing a connection loss. The optical fiber component includes an optical fiber (200) having two end faces (211,221) polished. The optical fiber has the first MFD conversion portion (210) for changing the mode field diameter at an end portion including one end face, and the second MFD conversion portion (220) for changing the mode field diameter at an end portion including the other end face-opposing one end face.

## Description

### BACKGROUND OF THE INVENTION

### Field of the Invention

The present invention relates to an optical fiber component for optically connecting different optical functional components, an optical module including the optical fiber component, and an optical communication system including the optical module.

### Related Background Art

Conventionally, in the field of optical communication, in order to increase the capacity of communication channels, optical communication systems such as WDM (Wavelength Division Multiplexing) transmission systems have been introduced. To build such an optical communication system, optical functional components such as a PLC (Planar Lightwave Circuit) have been used. It is expected that this trend will grow in the future.

For example, Japanese Patent Laid-Open No. 2000-275470 discloses a technique of connecting a planar lightwave circuit, in which the specific refractive index difference between the waveguide region (core region) and the cladding region is increased to 1.5% to realize a high degree of integration, to a single mode optical fiber (1.3 µm zero-dispersion fiber) having a mode field diameter (about 10 µm) larger than that (about 6 µm) of this planar lightwave circuit. In general, with an increase in the degree of integration of such a planar lightwave circuit, the mode field diameter decreases. If a planar lightwave circuit whose mode field diameter has decreased in this manner is directly connected to a single mode optical fiber, a connection loss of about 1.4 dB is caused by a mode field diameter mismatch. According to Japanese Patent Laid-Open No. 2000-275470, therefore, a planar lightwave circuit is not directly connected to a single mode fiber, but one end portion of an intermediate fiber which has a mode field diameter equal to that of the planar lightwave circuit is temporarily connected to the planar lightwave circuit, and a TEC (Thermally diffused Expanded Core) treatment is performed for the other end portion of this intermediate fiber to increase the mode field diameter. Thereafter, this end portion is connected to a single mode optical fiber, thereby optically connecting the planar lightwave circuit and single mode optical fiber having different mode field diameters to each other.

### SUMMARY OF THE INVENTION

The present inventors have found the following problems upon a close examination on the prior art. Japanese Patent Laid-Open No. 2000-275470 discloses the technique of optically connecting a planar lightwave circuit to a single mode optical fiber through an intermediate fiber to reduce the connection loss caused by the mode field diameter mismatch between the planar lightwave circuit and the single mode optical fiber which is caused with an increase in the degree of integration of the planar lightwave circuit. This intermediate fiber is a waveguide to be processed which is connected as a portion of the planar lightwave circuit to the planar lightwave circuit because it is difficult to perform a TEC treatment for the highly integrated planar lightwave circuit itself. A TEC treatment is performed for an end portion of this intermediate fiber which is connected to the single mode optical fiber to make the mode field diameter of the end portion coincide with the mode field diameter of the single mode optical fiber.

As described above, according to the technique disclosed in Japanese Patent Laid-Open No. 2000-275470, before a highly integrated planar lightwave circuit is optically connected to a single mode optical fiber, an intermediate fiber whose mode field diameter is equal to that of the planar lightwave circuit must be connected to the planar lightwave circuit. However, no misalignment is allowed for core regions in connecting a planar lightwave circuit having a small mode field diameter to an intermediate fiber, and hence a high-precision connection technique is required, resulting in a drop in manufacturing efficiency. In a structure using an intermediate fiber as a portion of a planar lightwave circuit, the degree of freedom in designing the intermediate fiber is considerably limited in consideration of optical connection between optical functional components which may have various mode field diameters.

In addition, assume a highly integrated planar lightwave circuit is optically connected to a single mode optical fiber through an intermediate fiber whose mode field diameter is equal to that of the planar lightwave circuit in the above manner. In this case, even if the planar lightwave circuit itself is reduced in size, the presence of the intermediate fiber as a portion of the planar lightwave circuit will interfere with a reduction in the overall size of an optical module.

The present invention has been made to solve the above problems, and has as its object to provide an optical fiber component having a structure with a high degree of freedom in design, an optical module having a structure which allows the use of the optical fiber component and a reduction in size, and an optical communication system including the optical module.

An optical fiber component according to the present invention is an intermediate fiber for optically connecting optical functional components having different mode field diameters to each other without increasing connection losses, and is formed from a short optical fiber having a length of several meters (preferably less than 1 meter) which effectively suppresses an increase in connection loss between optical functional components having different mode field diameters (MFDs), e.g., an optical fiber, planar lightwave circuit, and a semiconductor laser. An optical fiber (first optical fiber) in the optical fiber component according to the present invention, in particular, is optically connected to optical functional components having different MFDs, and hence the two end faces of this optical fiber are preferably polished. In order to provide a high degree of freedom in design regardless of the types of optical functional components to be connected, this first optical fiber has a first MFD conversion portion for changing a mode field diameter at an end portion including one end face of the first optical fiber, and a second MFD conversion portion for changing a mode field diameter at an end portion including the other end face opposing the one end face. In this case, the mode field diameter of one end face of the two end faces of the first optical fiber may differ from the mode field diameter of the other end face. As described above, this optical fiber component has a high degree of freedom in design, which can effectively suppress an increase in connection loss regardless of the types of optical functional components to be optically connected. The first optical fiber described above preferably has a constant outer diameter to obtain sufficient strength.

In addition, the mode field diameter of an intermediate portion of the first optical fiber described above which is located between the first and second MFD conversion portions is preferably smaller than the mode field diameters of the one end face or the other end face. More specifically, the mode field diameter of the intermediate portion is preferably 8 µm or less. This is because, if the mode field diameter is 8 µm or less, even when a portion of the first optical fiber is bent at a radius of curvature of less than 30 mm, furthermore 10 mm or less, an increase in bending loss can be suppressed. Even if the accommodation space for the optical fiber component is limited, an increase in the overall size of a module to which the optical fiber component is applied can be effectively avoided. Additionally, an increase in loss of the first optical fiber is 0.1 dB or less when bent at a radius of curvature of less than 30 mm, preferably 10 mm or less. Further, it is preferable that a loss at the bent portion of the first optical fiber is 0.1 dB or less.

In the optical fiber component according to the present invention, the first optical fiber includes a core region extending along a predetermined axis and a cladding region formed around the core region. In this case, each of the first and second MFD conversion portions is a portion which is located at an end portion of the first optical fiber and has an enlarged or reduced core region along the longitudinal direction of the first optical fiber. Note that means for changing core region in this manner include, for example, changing the outer diameter of the core region itself in a tapered form, expanding or reducing the core region by a TEC treatment (included in thermal diffusion process), and preparing a new waveguide member functioning as an MFD conversion portion. Each of the first and second MFD conversion portions is obtained by increasing or decreasing the outer diameter of a core region of a portion of the first optical fiber which corresponds to at least one of the first and second MFD conversion portions along the longitudinal direction of the first optical fiber. In addition, each of the first and second MFD conversion portions can be obtained by performing a TEC treatment for a portion corresponding to at least one of the first and second MFD conversion portions. Furthermore, each of the first and second MFD conversion portions whose core regions change in a stepped form can be obtained by fusion splicing, as at least one of the first and second MFD conversion portions, a waveguide member having a mode field diameter different from that of the intermediate portion of the first optical fiber to the intermediate portion.

The optical fiber component according to the present invention may include a second optical fiber, in addition to the first optical fiber, which has a mode field diameter different from that of the intermediate portion of the first optical fiber. In this case, the second optical fiber may be fusion spliced to one of the end faces of the first optical fiber. The mode field diameter of an end face is accurately adjusted by performing a TEC treatment for a portion corresponding to one of the first and second MFD conversion portions adjacent to the second optical fiber.

The optical fiber component according to the present invention may further include a carbon coat layer formed on the outer surface of the first optical fiber. With this structure, even if a portion of the first optical fiber is bent at a radius of curvature of less than 30 mm, furthermore 10 mm or less, static fatigue rupture is avoided.

The optical fiber component having the above structure can be applied to various optical components. For example, optical components to which the optical fiber component can be applied are an optical module having a plurality of optical fibers, one of which having the same structure as that of the first optical fiber, and the like.

The optical module according to the present invention has a structure which allows a reduction in overall size while various optical functional components are housed. More specifically, this optical module includes an optical functional component such as an optical fiber, a planar lightwave circuit (optical waveguide element), or a semiconductor laser, a case housing the optical functional component, and an optical fiber component housed in the case, together with the optical functional component. The optical fiber component, in particular, is an intermediate member for connecting the optical functional component in the case to an optical functional component outside the case, and formed from a short optical fiber having a length of about several meters (preferably less than 1 meter). This optical fiber (first optical fiber) has one end optically connected to the optical functional component in the case, and an intermediate portion positioned between two end portions has a mode field diameter of 8 µm or less. The optical fiber is entirely or partly housed in the case while at least a portion of this intermediate portion is bent at a radius of curvature of less than 30 mm, preferably 10 mm or less. In this case, an increase in loss at the bent portion of the optical fiber is preferably 0.1 dB or less to allow high-density interconnection.

As described above, in the optical module according to the present invention, an optical fiber component for optically connecting an optical functional component inside the case to an optical functional component outside the case is realized by an optical fiber structure resistant to bending (allowing high-density interconnection) so as to make an increase in loss at the bent portion become 0.1 dB or less. This makes it possible to reduce the overall size of the optical module.

Note that a reduction in the size of each optical functional component itself inside the case is preferable for a reduction in the size of the optical module. In this case, a mode field diameter mismatch may occur among optical functional components located inside and outside the case. For this reason, it is preferable that the above optical fiber component further include a structure for effectively reducing a connection loss between optical functional components located inside and outside the case. More specifically, the first fiber included in the optical fiber component preferably has an MFD conversion portion for changing the mode field diameter at an end portion including at least one of the end faces. More preferably, the first MFD conversion portion is formed at an end portion including one end face to be optically connected to the optical functional component inside the case, and the second MFD conversion portion is formed at an end portion including the other end face opposing one end face. In this case, in order to provide a high degree of freedom in design so as to effectively suppress an increase in connection loss regardless of the types of optical functional components to be optically connected, the mode field diameter of one end face of the two end faces of the first optical fiber may differ from that of the other end face.

The mode field diameter of the intermediate portion of the first optical fiber which is located between the first and second MFD conversion portions is preferably smaller than the mode field diameters of one end face and the other end face. More specifically, the mode field diameter of the intermediate portion is preferably 8 µm or less. This is because, if the mode field diameter is 8 µm or less, even when a portion of the first optical fiber is bent at a radius of curvature of less than 30 mm, preferably 10 mm or less, an increase in bending loss is suppressed. Even if, therefore, the housing space for the optical fiber component is limited, an increase in the overall size of the module to which the optical fiber component is applied can be effectively avoided. Note that since the first and second MFD conversion portions are susceptible to bending, a connector may be attached to an end portion of the optical fiber component while one of the first and second MFD conversion portions is housed, depending on interconnection conditions.

An optical module according to the present invention may include a plurality of optical fibers each having the same structure as the optical fiber component having the above structure. In this case, a plurality of optical functional components having different mode field diameters may be housed in the case.

In this optical module, the mode field diameters of end faces of the plurality of optical fibers constituting the optical fiber component are separately adjusted in accordance with the mode field diameters of optical functional components to be connected. In addition, in an optical fiber component including a plurality of optical fibers in this manner, the lengths of these optical fibers may be separately adjusted in accordance with the positions of optical functional components to be connected so as to minimize the necessity of an excess length accommodation.

In addition, an optical fiber component may have a structure in which a plurality of included optical fibers (each having the same structure as that of the first optical fiber) are arranged on a predetermined plane. In this case, at least a portion of each optical fiber included in the optical fiber component is bent at a predetermined radius of curvature due to the positions of optical functional components to be connected and a limitation on the housing space of the optical fiber component. More specifically, the mode field diameter of the intermediate portion of each optical fiber included in the optical fiber component which is located between end portions corresponding to the first and second MFD conversion portions is 8 µm or less, the outer surface of each optical fiber is carbon-coated, and at least a portion of each optical fiber may be bent at a radius of curvature of less than 30 mm, preferably 10 mm or less.

If the optical functional components included in the case include an optical waveguide element, the mode field diameter of an end face of the first optical fiber which is optically connected to the optical waveguide element preferably coincides with the mode field diameter of the optical waveguide element or falls within a range of ±10% with respect to the mode field diameter of the optical waveguide element. If the optical functional components housed in the case include a semiconductor laser, one end face of the first optical fiber preferably has a mode field diameter enough to obtain a sufficient spatial coupling efficiency with respect to the semiconductor laser. In addition, it is preferable that the first optical fiber further include an optical coupling system such as a lens, in order to optically connect the semiconductor laser to the first optical fiber with sufficient spatial coupling efficiency.

The optical module according to the present invention may comprises a plural kinds of optical functional components in a case, and in this case, further comprises one or more optical fiber components in order to connect between the optical functional components, and between the optical functional component and an external optical functional components such as an optical fiber transmission line.

In the case that at least one of the plural kinds of optical functional components disposed in the case includes an optical waveguide element, it is preferable that a mode field diameter of an end face of the optical fiber component which is optically connected to the optical waveguide element coincides with a mode field diameter of said optical waveguide element or falls within a range of ±10% with respect to the mode field diameter of the optical waveguide element. Also, in the case that at least one of the plural kinds of optical functional components includes a semiconductor laser, it is preferable that one end face of said optical fiber component which is optically connected to said semiconductor laser has a mode field diameter enough to obtain a sufficient spatial coupling efficiency with respect to said semiconductor laser.

The optical module having the above structure can be applied to an optical communication system including an optical fiber transmission line. In an optical communication system according to the present invention, the mode field diameter of an end face of the first optical fiber which is optically connected to the optical fiber transmission line preferably coincides with the mode field diameter of the optical fiber transmission line or falls within a range of ±10% with respect to the mode field diameter of the optical fiber transmission line. In addition, a connector may be attached to an end portion of the optical fiber transmission line. In this case, a connector to be connected to the connector attached to the end portion of the optical fiber transmission line is preferably attached to an end portion of the first optical fiber while the second MFD conversion portion is housed.

The present invention will become more fully understood from the detailed description given hereinbelow and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

Figs. 1 is a view showing the structure of an optical module to which an optical fiber component according to the present invention can be applied;
Figs. 2A and 2B are views showing the structure of a module rack to which the optical fiber component according to the present invention is applied;
Figs. 3A to 3C are views each showing the basic structure of the first embodiment of an optical module according to the present invention;
Fig. 4A and 4B are views showing the basic structure of the first embodiment of the optical fiber component according to the present invention;
Figs. 5A to 5D are views each showing the structure of an MFD conversion portion in an optical fiber component according to the present invention;
Fig. 6A to 6C are views for explaining various connection structures for optical functional components and optical fiber components;
Fig. 7 is a view showing the structure of the second embodiment of the optical fiber component according to the present invention;
Fig. 8 is a view showing the structure of the third embodiment of the optical fiber component according to the present invention;
Figs. 9A to 9C are views showing various modifications of an optical module according to the first embodiment;
Fig. 10 is a view showing the schematic structure of the second embodiment of the optical module according to the present invention;
Figs. 11A and 11B are views showing the first and second structures of an optical fiber component which can be applied to the optical module according to the second embodiment;
Fig. 12 is a view showing the third structure of the optical fiber component which can be applied to the optical module according to the second embodiment;
Fig. 13 is a view showing the structure of the fourth embodiment (optical cord) of the optical fiber component according to the present invention;
Fig. 14 is a view showing the schematic structure of the third embodiment of the optical module according to the present invention;
Figs. 15A to 15C are views showing various modifications of an optical communication system (an optical communication system according to the present invention) to which the optical modules according to the first and second embodiments are applied; and
Fig. 16 is a view showing another modification of an optical communication system (an optical communication system according to the present invention) to which the optical modules according to the third embodiment is applied.

### DETAILED DESCRIPTION OF THE PREFERRED EMBODIMENTS

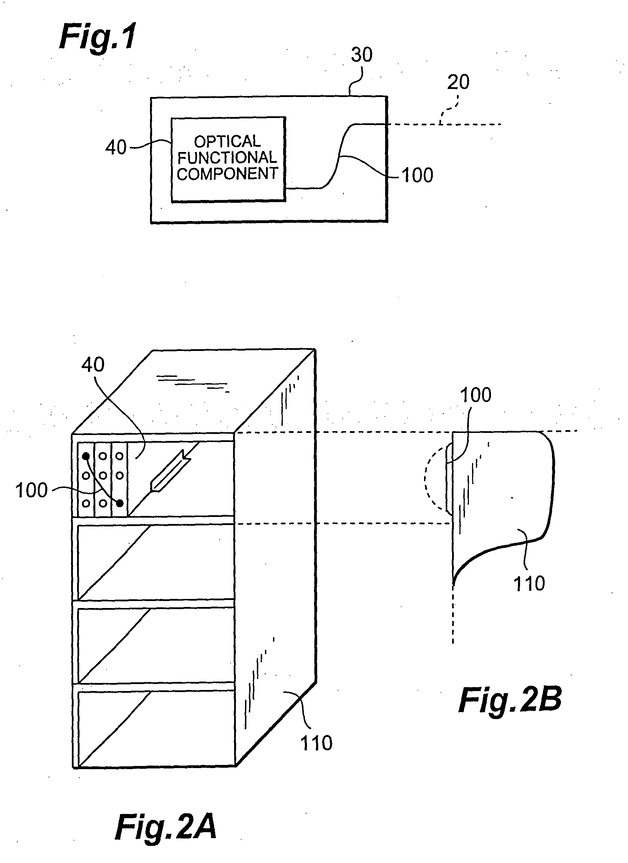

Each embodiment of an optical fiber component, optical module, and optical communication system according to the present invention will be described in detail below with reference to Figs. 1, 2A to 6C, 7, 8, 9A to 9C, 10, 11A, 11B, 12 to 14, 15A to 15C and 16. Note that the same reference numerals denote the same portions and elements throughout the drawings, and a repetitive description will be avoided.

An optical fiber component according to the present invention is an intermediate member for effectively suppressing an increase in connection loss between optical functional components having different mode field diameters (MFDs), e.g., an optical fiber, planar lightwave circuit, and semiconductor laser, and includes a short optical fiber having a maximum length of about several meters (preferably less than 1 meter).

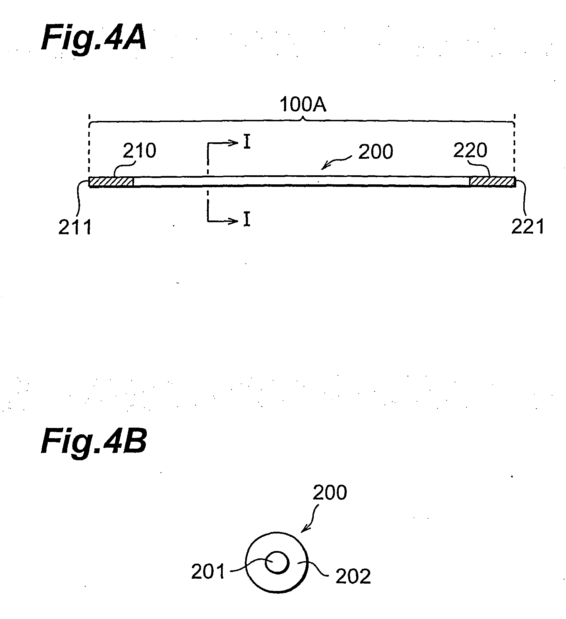

For example, as shown in Fig. 4A, an optical fiber component according to the present invention includes an optical fiber 200 having first and second MFD conversion portions 210 and 220 at its two ends. These conversion portions serve to convert mode field diameters. This optical fiber component can be applied to an optical component such as an optical module, as shown in Fig. 1. Fig. 1 is a view showing the structure of a general optical module to which the optical fiber component according to the present invention can be applied. In this optical module, a predetermined optical functional component 40 is housed in a case 30. An optical fiber component 100 according to the present invention functions as an intermediate member for optically connecting the optical functional component 40 mounted in this optical module to an optical fiber 20 which is an external optical functional component. Figs. 2A and 2B are views showing the structure of a module rack 110 to which the optical fiber component according to the present invention is applied. A plurality of cards equipped with optical functional components 40 are mounted on the shelves of this module rack 110. In this case as well, the optical fiber component 100 can function as an intermediate member for optically connecting these optical functional components to each other.

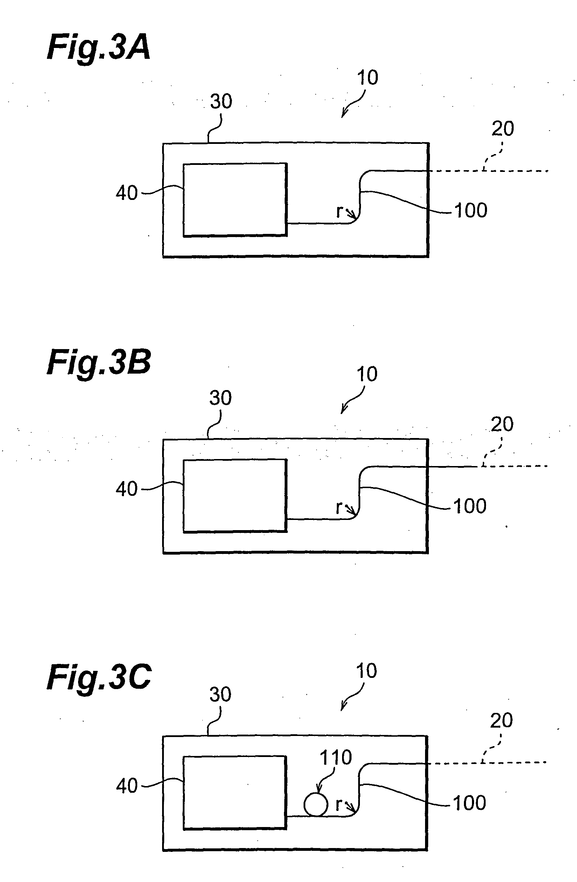

Figs. 3A to 3C are views showing the basic structures of an optical module according to the first embodiment of the present invention. An optical module 10 according to the first embodiment includes an optical fiber, a planar lightwave circuit (optical waveguide element), an optical functional component 40 such as a semiconductor laser, a case 30 housing the optical functional component 40, and an optical fiber component 100 housed in the case 30 connected with the optical functional component 40. The optical fiber component 100, in particular, functions as an intermediate member for optically connecting the optical functional component 40 in the case 30 to an optical fiber 20 (a transmission line in an optical communication system) which is another optical functional component located outside the case 30, and is formed from a short optical fiber having a length of about several meters (preferably, less than 1 meter). This optical fiber (first optical fiber) has one end optically connected to the optical functional component 40 in the case 30. At least an intermediate portion of this optical fiber, positioned between its two end portions, has a mode field diameter of 8 µm or less. The optical fiber component 100 is housed in the case 30 while at least a part of the intermediate portion of the optical fiber included in the optical fiber component is bent at a radius of curvature r (less than 30 mm, preferably 10 mm or less). With regard to the housed form of the optical fiber component 100, the whole optical fiber component 100 may be housed in the case 30 as shown in Fig. 3A, or part of the component may be housed in the case 30 as shown in Fig. 3B. Alternatively, as shown in Fig. 3C, an excess length accommodation may be performed for a part of the optical fiber component 100 which is housed in the case 30. Referring to Fig. 3C, reference numeral 110 denotes a surplus length handling portion of the optical fiber component 100. In order to realize high-density interconnection, a loss increase in the bent portion of the above optical fiber of the optical fiber component 100 is preferably 0.1 dB or less.

When miniaturization of an optical module to which the optical fiber component 100 is applied is taken into consideration, various problems are posed. For example, the fusion splice between the optical fiber component 100 (essentially the optical fiber included in the optical fiber component 100) and the optical fiber 20 which is an external transmission line needs to be reinforced to suppress an increase in connection loss. In this case, however, the overall size of the optical module increases unless the optical fiber component 100 is bent at a smaller radius of curvature. Assume that one end of the optical fiber component 100 is connected to a planar lightwave circuit such as an AWG (Arrayed Waveguide Grating) via a fiber array. In this case, if an MFD conversion portion is housed in this fiber array, no new reinforcing structure is required. If, however, the optical fiber included in this optical fiber component 100 is a general single mode optical fiber, since a transmission loss is caused by bending, a part of the optical fiber component 100 cannot be bent at a small radius of curvature. In this case as well, the overall size of the optical module cannot be decreased so much.

The optical fiber component 100, which can be applied to the optical module according to the present invention, includes the optical fiber whose intermediate portion, positioned between the two end portions, has a mode field diameter of 8 µm or less (preferably less than 6 µm), and hence has a low bending loss. This makes it possible to bend the optical fiber component 100 at the radius of curvature r (less than 30 mm, preferably 10 mm or less) that is small enough to realize high-density interconnection or packaging (to reduce the housing space). As a consequence, the overall size of the optical module 10 like the one shown in Figs. 3A to 3C can be further decreased.

As the overall size of the optical module 10 decreases, the optical functional component 40 itself, which is housed in the case 30, needs to be decreased in size. This may cause a mode field diameter mismatch increase between portions located inside and outside the case 30. In such a case, if the optical fiber component 100 according to the present invention is applied to the optical module 10, an optical module with a higher degree of freedom in design can be realized. That is, an optical module may be designed such that the mode field diameter of the intermediate portion of an optical fiber 200 which is located between first and second MFD conversion portions 210 and 220 is smaller than the mode field diameter of each of two end faces 211 and 221. More specifically, the mode field diameter of the intermediate portion of the optical fiber 200 which is located between the first and second MFD conversion portions 210 and 220 is 8 µm or less (preferably less than 6 µm). The optical fiber component 100 according to the present invention is designed such that the mode field diameter of the intermediate portion of the optical fiber 200 which is located between the first and second MFD conversion portions 210 and 220 is smaller than that of each end face. This makes it possible to effectively suppress an increase in connection loss due to a MFD mismatch between the optical functional component and the optical fiber component and reduce the bending loss. Therefore, the optical fiber component 100 can be bent at a small radius of curvature (the housing space can be reduced). As a consequence, the optical module shown in Fig. 3A can be further decreased in size.

When the respective function components housed in the module rack 110 shown in Fig. 2A are connected to each other through the optical fiber component 100 as well, since the optical fiber component 100 can be bent at a small radius of curvature as shown in Fig. 2B, no additional interconnection space is required. Note that the broken lines in Fig. 2B indicate how interconnection is made by using an intermediate member with a larger bending radius. Obviously, using such an intermediate member with a large bending loss requires a larger interconnection space than in the case of the optical fiber component 100 according to the present invention.

More specifically, the optical fiber component 100 which can be applied to the optical module according to the present invention includes the optical fiber 200 having the polished two end faces 211 and 221 so as to connect optical functional components located inside or outside the case 30, as shown in Fig. 1. Figs. 4A and 4B are views showing the arrangement of the first embodiment of the optical fiber component according to the present invention.

In order to reduce the connection loss between optical functional components having different mode field diameters, in particular, an optical fiber 200 in an optical fiber component 100A having the first structure preferably has a first MFD conversion portion 210 for changing the mode field diameter at an end portion including one end face 211, and a second MFD conversion portion 220 for changing the mode field diameter at the other end face 221 opposing one end face 211. In the case of this optical fiber component according to the present invention, which has MFD conversion portions at the two ends, in order to ensure a sufficient degree of freedom in design, the radius of curvature of the optical fiber housed in the case may be less than 30 mm.

Note that the optical fiber 200 includes a core region 201 extending along a predetermined axis and a cladding region 202 formed outside the core region 201, as shown in Fig. 4B. Fig. 4B is a view showing the sectional structure of the optical fiber 200 taken along a line I - I in Fig. 4A. Since the optical fiber component 100 functions as an intermediate component capable of optically connecting optical functional components having different mode field diameters to each other without increasing connection loss, the mode field diameters of the two end faces 211 and 221 of the optical fiber 200 may be equal to those of optical functional components to which the two end faces are optically connected or fall within the range of about ± 10% with respect to those functional components. In addition, the mode field diameters of the respective end faces may be set in accordance with the mode field diameters of optical functional components to which the end faces are connected, and they need not always coincide with each other. The optical fiber 200 having such a structure can effectively reduce the connection loss due to a mode field diameter mismatch between optical functional components optically connected to each other.

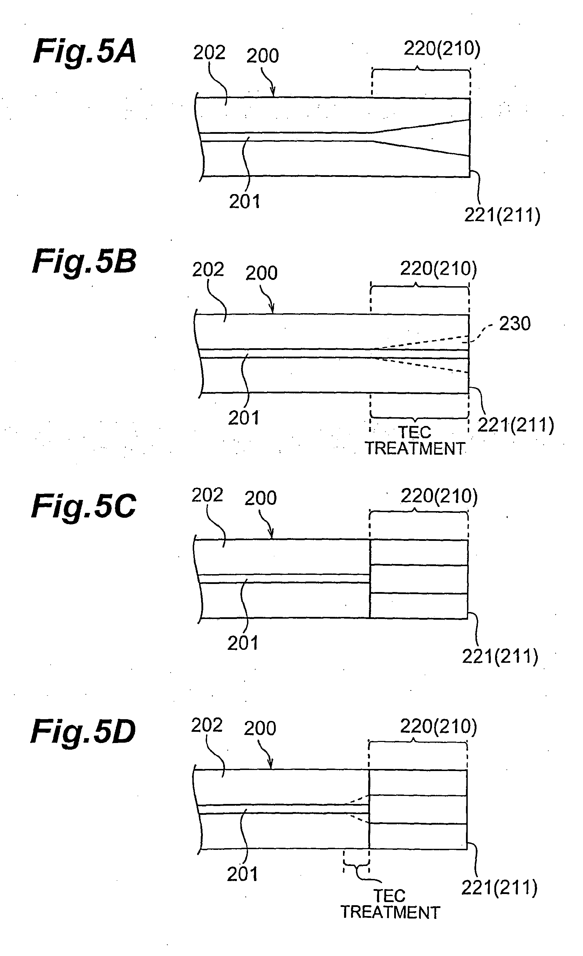

Figs. 5A to 5D are views showing the structures of an MFD conversion portion in the optical fiber component 100 according to the present invention, and more specifically enlarged views of a portion near the second MFD conversion portion 220 of the optical fiber 200. Figs. 5A to 5D show the first and second MFD conversion portions 210 and 220 which have the same structure. However, the first and second MFD conversion portions 210 and 220 need not always have the same structure.

The first and second MFD conversion portions 210 and 220 are located at the end portions of the optical fiber 200 and formed by enlarging or reducing the core region 201 along the longitudinal direction of the optical fiber 200. Means for changing the size of the core region 201 in this manner mainly include changing the outer diameter of the core region 201 itself in a tapered form, enlarging or reducing the core region 201 in a tapered form by a TEC treatment, and changing the size of the core region 201 in a stepped form by preparing a different waveguide member having a different mode field diameter as a portion of the first optical fiber 200.

More specifically, as shown in Fig. 5A, in the first structure in which the core region 201 is changed into a tapered form, the outer diameter of a portion of the core region 201 which corresponds to at least one of the first and second MFD conversion portions 210 and 220 is increased or decreased toward the end face 221 in a tapered form. By changing the structure of the first and second MFD conversion portions 210 and 220 in this manner, the mode field diameters can be adjusted to desired sizes.

The second structure in which the core region 201 is originally of the same diameter but changed into a tapered form can be realized by performing a TEC treatment. For example, as shown in Fig. 5B, an optical fiber doped with a dopant as a refractive index adjustor (for example, an optical fiber having a core doped with a refractive index increaser and a cladding of pure silica glass; an optical fiber having a core of pure silica glass and a cladding doped with a refractive index reducer; and an optical fiber having a core doped with a refractive index increaser and a cladding doped with a refractive index reducer) may be prepared for the core region 201, and the core region 201 may be enlarged in a tapered form along the longitudinal direction of the first optical fiber by performing a local TEC treatment for a portion corresponding to at least one of the first and second MFD conversion portions 210 and 220. Referring to Fig. 5B, reference numeral 230 denotes a thermally diffused region of the dopant contained in the core region 201. By performing a TEC treatment at an end portion of the optical fiber 200 in this manner, the core region 201 can be enlarged owning to thermal diffusion at lower cost. In contrast to this, by preparing an optical fiber drawn while adding a large tension and performing a TEC treatment to the prepared optical fiber, a stress in the prepared optical fiber decreases, and thereby a mode field diameter can be also reduced. That is, the core region may be reduced in accordance with the mode field diameter of an optical functional component to be connected by performing a TEC treatment for portions corresponding to the first and second MFD conversion portions 210 and 220. Note that a structure in which the mode field diameters of the first and second MFD conversion portions 210 and 220 at the two ends are relatively large or small can be obtained by performing a TEC treatment for the intermediate portion between the first and second MFD conversion portions 210 and 220.

As shown in Fig. 5C, the first and second MFD conversion portions 210 and 220 (the third structure in which the core region 201 is changed) can be obtained by fusion splicing a waveguide member having a mode field diameter larger than that of the intermediate portion of the first optical fiber 200, as a portion of the first optical fiber 200, to the intermediate portion. When the difference between the mode field diameter of the intermediate portion of the first optical fiber 200 and that of the waveguide member is small, at the intermediate portion simply fusion spliced to the waveguide member, an increase in connection loss is small. As shown in Fig. 5D, another example based on the previous example shown in Fig. 5C, when a TEC treatment is performed for a portion near the portion where the intermediate portion is in contact with the waveguide member to enlarge the core region of the intermediate portion, an increase in connection loss can be effectively avoided (the fourth structure in which the core region 201 is changed). In contrast with this, by preparing an optical fiber having a smaller mode field diameter, a mode field diameter of the MFD conversion portion 220 or 210 can be reduced.

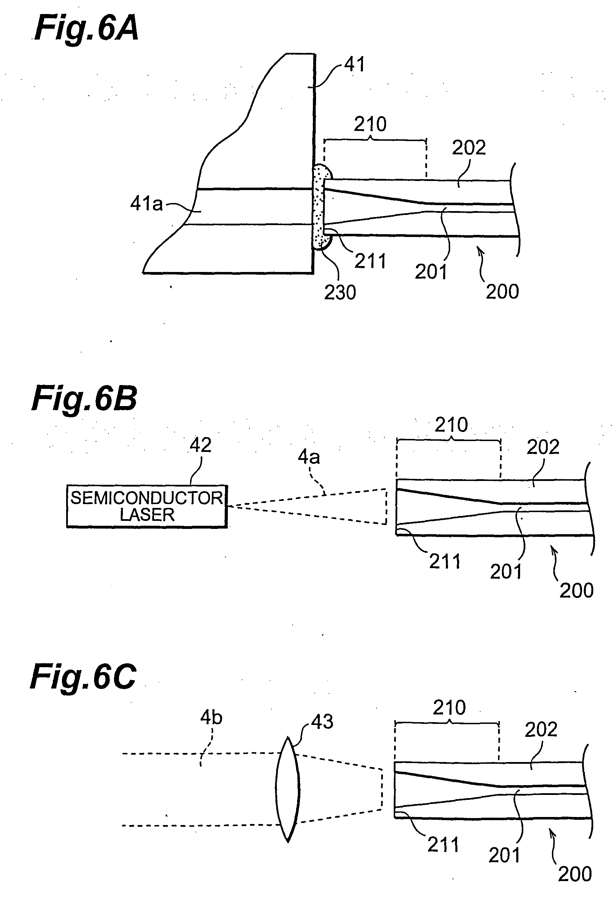

In the optical module according to the present invention, various forms for optically connecting the optical functional component 40 to the optical fiber component 100 in the case 30 are conceivable depending on the type of the optical functional component 40. According to the first connection form, when the optical functional component 40 includes a planar lightwave circuit, a planar lightwave circuit 41 may be connected to the optical fiber 200 included in the optical fiber component 100 with an adhesive 230, as shown in Fig. 6A. Referring to Fig. 6A, reference numeral 41a denotes a core region or a mode field (optical waveguide region: hereinafter "core region") formed in the planar lightwave circuit 41. The core region 41a is optically connected to the core region 201 of the optical fiber 200 with a predetermined coupling efficiency. In addition, if the optical functional component 40 includes an active element such as a semiconductor laser, a semiconductor laser 42 and optical fiber 200 may be arranged such that they are connected to each other with a predetermined spatial coupling efficiency, as shown in Fig. 6B. Referring to Fig. 6B, reference numeral 4a denotes a beam output from the semiconductor laser 42. Furthermore, as the optical functional component 40, a lens system may be placed between the semiconductor laser 41 and the optical fiber 200 to connect them with a predetermined spatial connection efficiency. Referring to Fig. 6C, the semiconductor laser 41 can be connected to the optical fiber 200 with a predetermined spatial coupling efficiency by guiding a beam 4b to the end face 211 of the optical fiber 200 via this lens system 43.

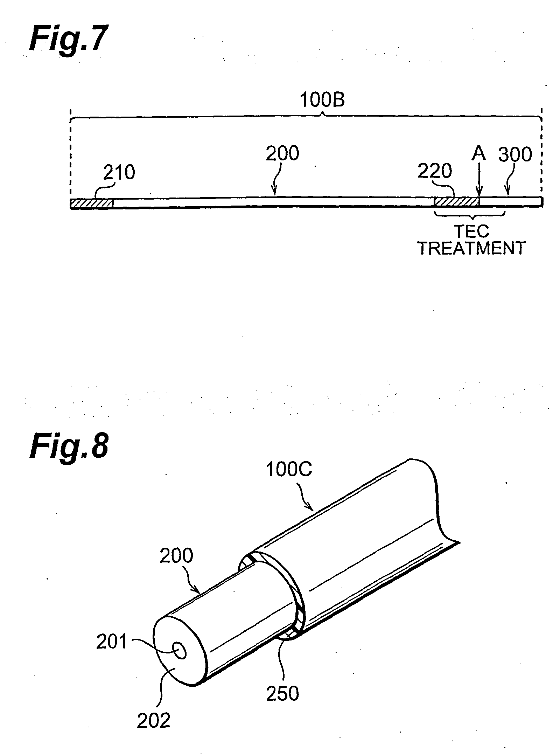

Fig. 7 is a view showing the structure of the second embodiment of the optical fiber component according to the present invention. An optical fiber component 100B according to the second embodiment includes an optical fiber 200 and another optical fiber 300 (second optical fiber) fusion spliced to an end face 221 of the optical fiber 200 located on the second MFD conversion portion 220 side. A predetermined region of the second MFD conversion portion 220, adjacent to this optical fiber 300, which includes a connection portion A, has undergone a thermal diffusion process. Since the mode field diameter of the optical fiber 300 is substantially equal to a target mode field diameter, the mode field diameter to be converted is accurately managed by performing a TEC treatment for a portion serving as the second MFD conversion portion 220 after fusion splicing between the optical fiber 200 and the optical fiber 300.

As described above, if the mode field diameter of the intermediate portion of the optical fiber 200 is sufficiently small, the fiber can be bent at a small radius of curvature. In the optical module 10 shown in Fig. 3A, if the second MFD conversion portion 220 of the optical fiber component 100 (the optical fiber 200 in effect) is incorporated in a connector or the like on the exit side of the case, there is no need to reinforce the fusion splice between the second MFD conversion portion 220 and the optical fiber 20, and the occurrence of a bending loss is suppressed.

The third embodiment of the optical fiber component of the present invention includes a carbon coat 250 formed on the outer surface of an optical fiber 200. Fig. 8 is a view showing the structure of the third embodiment of the optical functional component according to the present invention. The optical fiber 200 includes a core region 201 and cladding region 202. With the formation of this carbon coat 250 preferably having a thick of less than 0.1 µm, even if the optical fiber 200 is bent at a radius of curvature of less than 30 mm (if this optical fiber is applied to an optical module without any MFD conversion portions at the two end portions) and at a radius of curvature of 10 mm or less, the possibility of static fatigue rupture of the optical fiber 200 will be greatly reduced.

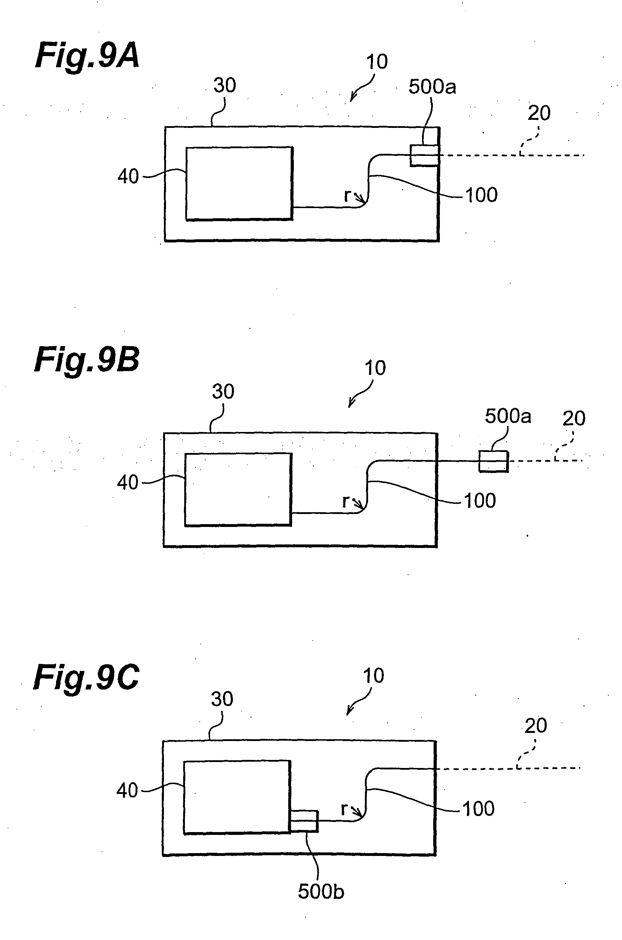

If the above optical fiber component 100 has first and second MFD conversion portions 210 and 220 at the two end portions, at least one of the first and second MFD conversion portions 210 and 220 may be bent depending on interconnection conditions. For this reason, in order to protect the first and second MFD conversion portions 210 and 220, connectors may be attached to the corresponding end portions. Each of Figs. 9A to 9C shows a structure in which a connector 500a or 500b is attached to at least one of the two end portions of the optical fiber component 100 as a modification of the optical module 10 according to the first embodiment. More specifically, in the optical module 10 shown in Fig. 9A, the connector 500a is attached to the end portion of the optical fiber component 100 at which the second MFD conversion portion 220 is located. The optical module 10 shown in Fig. 9B has a structure in which the end portion of the optical fiber component 100 at which the second MFD conversion portion 220 is located is positioned outside the case 30. The connector 500a is attached to the end portion of the optical fiber component 100 at which the second MFD conversion portion 220 is located. In the optical module 10 shown in Fig. 9C, the connector 500b is attached to the end portion of the optical fiber component (on which the first MFD conversion portion 210 is located) connected to the optical functional component 40. Note that a fiber array may be used as the connector 500b.

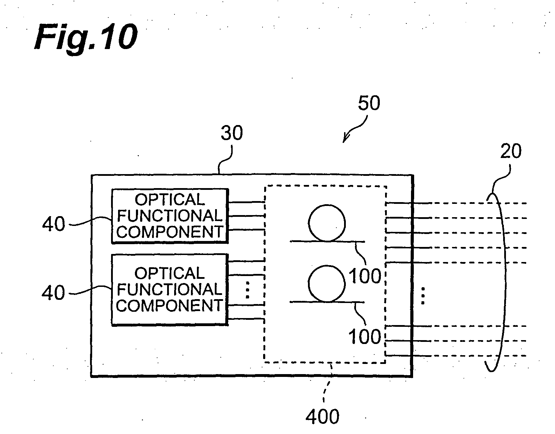

The optical fiber component 100 having the above structure can be applied to various optical components. For example, this component can be applied to an optical module having a plurality of optical fibers each having the same structure as that of the optical fiber component 100 having the above structure. Fig. 10 is a view showing the structure of the second embodiment of the optical module according to the present invention. An optical fiber component 400 including a plurality of optical fibers (each of which is identical to the optical fiber component 100 described above) is applied to an optical module 50 according to the second embodiment. Note that in the optical module 50 according to the second embodiment, an optical functional component 40 housed in a case 30 is an optical fiber, optical waveguide element, semiconductor laser, or the like as in the case of the optical module 10 according to the first embodiment.

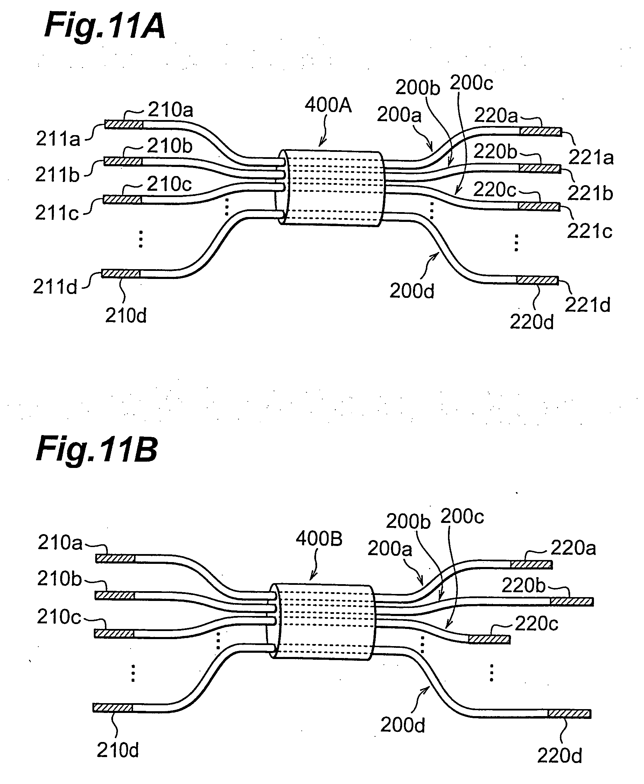

Fig. 11A is a view showing the first structure of the optical fiber component 400 applied to the optical module 50 according to the second embodiment. This optical fiber component 400A includes a plurality of optical fibers 200a to 200d each having the same structure as that of the optical fiber component 100 described above. These optical fibers 200a to 200d respectively include first MFD conversion portions 210a to 210d and second MFD conversion portions 220a to 220d. The optical fibers 200a to 200d also have polished end faces 211a to 211d on one side and polished end faces 221a to 221d on the other side. In this optical fiber component 400A, in particular, the mode field diameters of the respective end faces 211a to 211d of the optical fibers 200a to 200d are separately adjusted to the mode field diameters of optical functional components to be connected. That is, the mode field diameters of all the end faces may differ from one another. For example, the mode field diameters of the end faces 221a to 221d are all 10 µm, whereas the mode field diameter of the end face 211a is 4 µm, the mode field diameters of the end faces 211b and 221d are 6 µm, and the mode field diameter of the end face 211c is 8 µm. According to the optical fiber component 400A having this structure, a plurality of types of optical functional components having different MFDs can be connected altogether.

Fig. 11B is a view showing the second embodiment of the optical fiber component 400 applied to the optical module 50 according to the second embodiment. In this optical fiber component 400B, the lengths of optical fibers 200a to 200d are separately adjusted to avoid any unnecessary excess length accommodation by satisfying structure conditions such as the positions of optical functional components to be connected (the lengths of the respective optical fibers may differ). According to the optical fiber component 400B having this structure, there is no need to perform any excess length accommodation, and the component can be efficiently housed in the limited housing space of the optical module. As a consequence, the overall size of the optical module can be decreased.

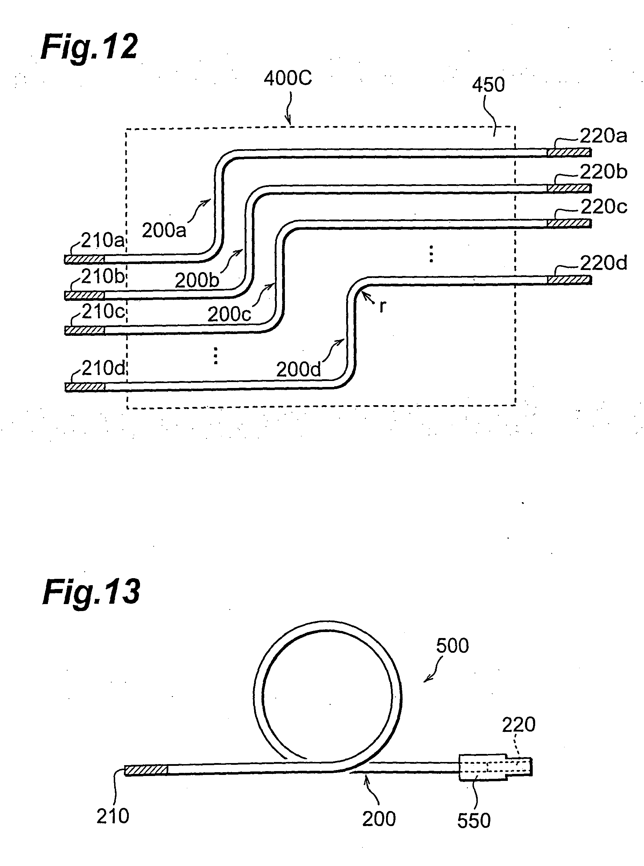

Fig. 12 is a view showing the third structure of an optical fiber component applied to the optical module 50 according to the second embodiment. In this optical fiber component 400C, optical fibers 200a to 200d are arranged on a laminate sheet 450 (predetermined plane), at least a portion of each of the optical fibers 200a to 200d is bent at a radius of curvature r. More specifically, each of the intermediate portions of the optical fibers 200a to 200d which are located between end portions corresponding to first MFD conversion portions 211a to 211d and second MFD conversion portions 221a to 221d has a mode field diameter of 8 µm or less. The outer surface of each of the optical fibers 200a to 200d may be carbon-coated (see Fig. 8). At least a portion of each of the optical fibers 200a to 200d is bent at a radius of curvature of less than 30 mm, preferably 10 mm or less.

In general, the housing space of the optical module 50 has its own limit due to a reduction in overall size. On the other hand, the respective end portions of the optical fibers 200a to 200d is required to bent at smaller radii of curvature at the installation positions depending on the layout positions of optical functional components to be connected. If such manufacturing conditions are satisfied, an increase in bending loss can be effectively suppressed, and an increase in connection loss between optical functional components arranged inside and outside the case 30 can be avoided even if the optical fiber component 400 is placed in a smaller space. In addition, the overall size of the optical module to which the optical fiber component 400 is applied can be reduced.

Fig. 13 is a view showing the structure of the fourth embodiment (optical cord) of the optical fiber component according to the present invention. This optical cord 500 includes an optical fiber 200 included in an optical fiber component 100 according to the present invention, and a connector 550 attached to one end portion of the optical fiber 200 while a second MFD conversion portion 220 is housed. As described above, according to the optical cord 500, since the second MFD conversion portion 220 of the optical fiber 200 is housed in the connector 550, the optical fiber 200 can be bent at an end portion of the connector 550. The second MFD conversion portion 220 having undergone a TEC treatment may rupture if a bending force is directly applied to it. If, however, the second MFD conversion portion 220 itself is housed in the connector 550 as shown in Fig. 13, there is no need to worry about it.

According to the optical cord 500 shown in Fig. 13, the connector 550 is attached to only one end of the optical fiber 200 having the second MFD conversion portion. However, connectors for protecting the MFD conversion portions may be attached to the two ends of the optical fiber 200.

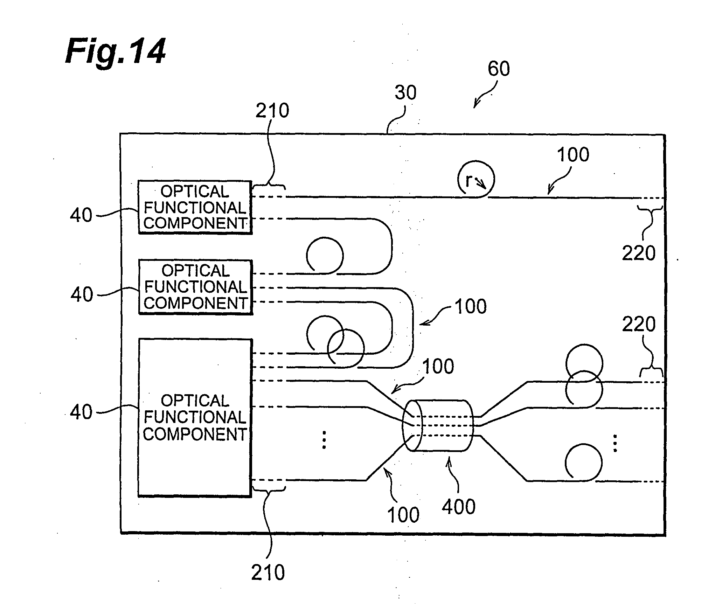

Further, the optical module according to the present invention may comprises a plural kinds of optical functional components in the case, and one or more optical fiber component (the optical fiber component according to the present invention) for connecting between the optical functional components or between the optical functional component and an external optical functional component such as an optical fiber transmission line. Fig. 14 is a view showing the schematic structure of the third embodiment of the optical module according to the present invention. The optical module 60 according to the third embodiment comprises a plurality of optical functional components 40 such as optical waveguide element, semiconductor laser, and the like, and one or more optical fiber components 100, 400. The optical fiber component 100 includes an optical fiber having end portions in which the first and second MFD conversion portions 210, 220 are respectively provided. The optical fiber component 400 includes a plurality of optical fibers, and each of those optical fibers has end portions in which the first and second MFD conversion portions 210, 220 are respectively provided.

The optical fibers 100, 400 may be arranged so as to connect between the optical functional components 40 in the case 30, and also these optical fibers 100, 400 may be arranged so as to connect between the optical functional component 40 and an external optical functional component such as an optical fiber transmission line. When the optical fibers 100, 400 arranged have an excess length portion, these optical fibers are arranged while the excess length portion is bent at a radius of curvature r of 10 mm or less.

Specifically, in the third embodiment, when at least one of the optical functional components 40 includes an optical waveguide element, a mode field diameter of an end face of optical fiber component 100 or 400 which is optically connected to the optical waveguide element coincides with a mode field diameter of the optical waveguide element or falls within a range of ±10% with respect to the mode field diameter of the optical waveguide element. On the other hand, when at least one of the optical functional components 40 includes a semiconductor laser, one end face of the optical fiber component 100 or 400 which is optically connected to the semiconductor laser has a mode field diameter enough to obtain a sufficient spatial coupling efficiency with respect to the semiconductor laser.

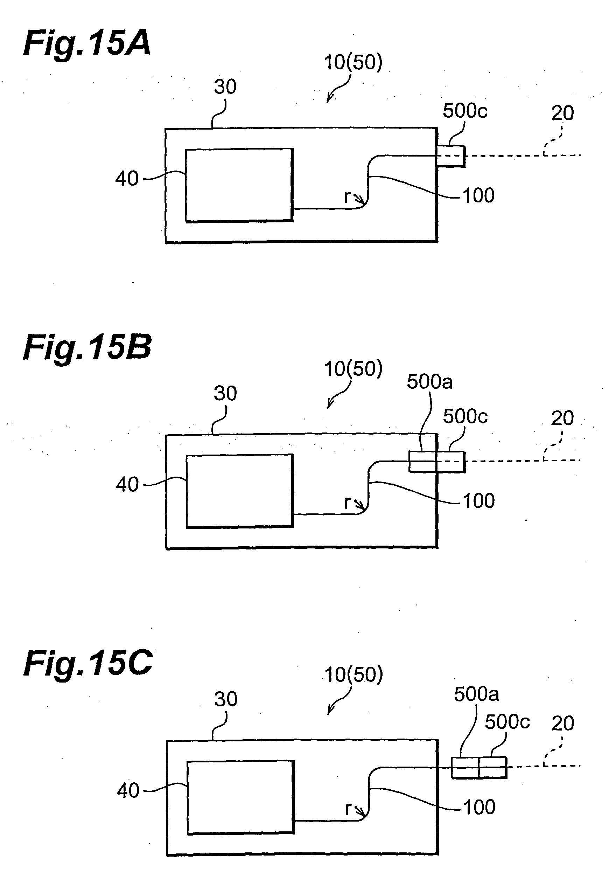

The optical communication system to which the optical modules 10 and 50 according to the first and second embodiments described above are applied can be variously modified. Figs. 15A to 15C are views showing various modifications of the optical communication system according to the present invention.

The optical communication system according to the present invention has an optical fiber transmission line 20 as an external optical functional component and an optical module 10 (50) having a structure like that described above. The optical fiber transmission line 200 and the optical module 10 (50) are optically connected to each other.

A connector 500c is attached to an end portion of the optical fiber transmission line 20, and a connector 500a is also connected to an end portion of an optical fiber component 100 which is connected to the optical fiber transmission line 20 (on which a second MFD conversion portion 220 is located). Fig. 15A shows the structure of an optical communication system in which a connector 500c is attached to an end portion of the optical fiber transmission line 20 which is connected to the optical fiber component 100. Fig. 15B is a view showing the structure of an optical communication system in which connectors 500a and 500b are respectively attached to an end portion of the optical fiber component 100 (on which the MFD conversion portion 220 is located) and an end portion of the optical fiber transmission line. Fig. 15C shows the structure of an optical communication system in which the connecting portion between the optical fiber component 100 and the optical fiber transmission line 20 in Fig. 15B is located outside the case 30 of the optical module 10 (50) .

In this optical communication system having such various structures, the mode field diameter of an end face of the optical fiber component 100 preferably coincides with the mode field diameter of the optical fiber transmission line 20 or falls within the range of ± 10% with respect to the mode field diameter of the optical fiber transmission line 20.

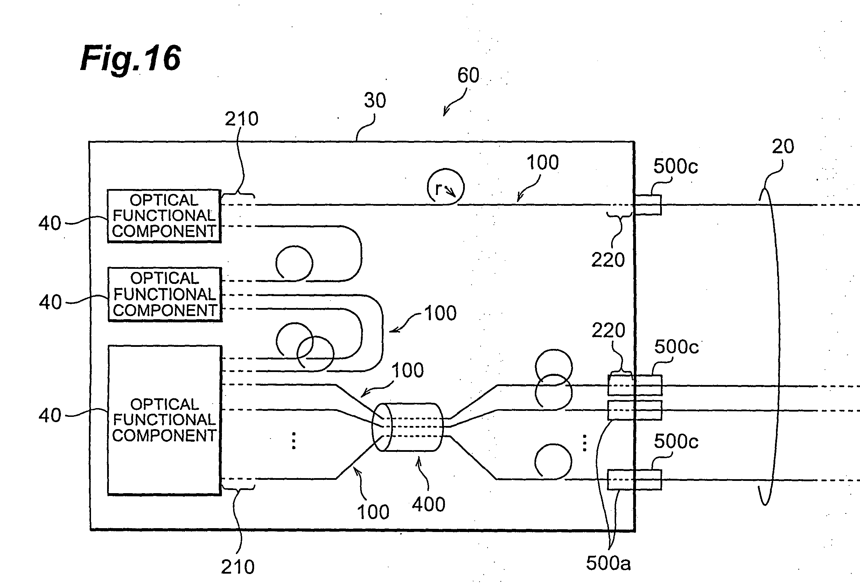

Further, Fig. 16 is a view showing various modifications of an optical communication system (an optical communication system according to the present invention) to which the optical modules according to the third embodiment is applied. The optical communication system has an optical fiber transmission line 20 as an external optical functional component and an optical module having the above-mentioned structure. The optical fiber transmission line 20 and one of the optical functional components 40 included in the optical module 60 are optically connected to each other. Particularly, an end portion of the optical fiber transmission line 20 is attached with a connector 500c, and an end portion (the second MFD conversion portion is positioned) of the optical fiber component 100, which is connected to the optical fiber transmission line 20, is also attached with a connector 500a. The connection aspects of the connectors 500a, 500c are same structures shown in Figs. 15A to 15C.

In the optical communication system shown in Fig. 16, mode filed diameters of the optical fiber components 100, 400, which are optically connected to the optical fiber transmission line 20, coincides with a mode field diameter of the optical fiber transmission line 20 or falls within a range of ±10% with respect to the mode field diameter of the optical fiber transmission line 20.

As described above, according to the optical fiber component, as an intermediate member for optically connecting optical functional components having different MFDs, an MFD conversion portion is provided for each end portion, which changes the mode field diameter of a corresponding one of the two end faces to a value equal to the MFD of an optical functional component to be connected. Therefore, an increase in connection loss can be effectively suppressed by a structure having a high degree of freedom in design regardless of the types of optical functional components to be connected.

In addition, according to the optical module and optical communication system according to the present invention, since an optical fiber component serving as an intermediate member for connecting an optical functional component to an optical fiber transmission line is housed in a case, together with the optical functional component, while a portion of the optical fiber component is bent at a radius of curvature of less than 30 mm, preferably 10 mm or less, a reduction in the overall size of the optical module can be attained. In addition, with the formation of an MFD conversion portion which makes the mode field diameters of an optical fiber component coincide precisely or approximately with the mode field diameters of optical functional components and the like to be connected to the two end portions of the optical fiber component, an increase in loss due to the mode field diameter mismatches between the optical functional components and the optical fiber transmission line can be effectively suppressed.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

## Claims

1. An optical fiber component including a first optical fiber having two end faces appropriately prepared,
said first optical fiber having a first MFD conversion portion for changing a mode field diameter at an end portion including one end face of said first optical fiber, and a second MFD conversion portion for changing a mode field diameter at an end portion including the other end face opposing the one end face.

2. A component according to claim 1, wherein a mode field diameter of the one end face of the two end faces of said first optical fiber differs from a mode field diameter of the other end face.

3. A component according to claim 1, wherein a mode field diameter of an intermediate portion of said first optical fiber which is located between said first and second MFD conversion portions is smaller than one of the mode field diameters of the one end face and the other end face.

4. A component according to claim 1, wherein said first optical fiber includes a core region extending along a predetermined axis and a cladding region formed on an outer surface of the core region, and
wherein an outer diameter of a portion of the core region of said first optical fiber which corresponds to at least one of said first and second MFD conversion portions is increased or decreased in a tapered form along a longitudinal direction of said first optical fiber.

5. A component according to claim 4, wherein the portion of the core region of said first optical fiber which corresponds to at least one of said first and second MFD conversion portions is enlarged in a tapered form along the longitudinal direction of said first optical fiber by a thermal diffusion process.

6. A component according to claim 1, wherein said first optical fiber includes at least a waveguide member which is located at least at one end portion and forms a portion of said first optical fiber to function as one of said first and second MFD conversion portions, said waveguide member having a mode field diameter different from a mode field diameter of an intermediate portion of said first optical fiber which is located between said first and second MFD conversion portions.

7. A component according to claim 6, wherein a portion of the intermediate portion of said first optical fiber which is in contact with said waveguide member has undergone a thermal diffusion process.

8. A component according to claim 4, wherein said component further comprises a second optical fiber which has a mode field diameter different from a mode field diameter of the intermediate portion of said first optical fiber which is located between said first and second MFD conversion portions, and is fusion spliced to one of the end faces of said first optical fiber, and one of said first and second MFD conversion portions which is to be located in a predetermined region including a fusion splice between said first and second optical fibers, or both said first and second MFD conversion portions have undergone a thermal diffusion process.

9. A component according to claim 1, wherein the mode field diameter of the intermediate portion of said first optical fiber which is located between said first and second MFD conversion portions is 8 µm or less.

10. A component according to claim 9, further comprising a carbon coat formed on an outer surface of said first optical fiber.

11. An optical module comprising a plurality of optical fibers each having the same structure as that of said first optical fiber included in said optical fiber component according to claim 1,
wherein at least one end face of one of two optical fibers selected from said optical fibers included in said optical module and one end face of the other of the two optical fibers differ in mode field diameter.

12. An optical module according to claim 11, wherein two optical fibers selected from the optical fibers included in said optical modules differ in length.

13. An optical module comprising a plurality of optical fibers arranged on a predetermined surface, each of which has the same structure as that of said first optical fiber included in said optical fiber component according to claim 1,
wherein at least one portion of each of said optical fibers included in said optical module is bent at a predetermined radius of curvature.

14. A module according to claim 13, wherein a mode field diameter of an intermediate portion of each of said optical fibers included in said optical module which is located between end portions corresponding to the first and second MFD conversion portions is 8 µm or less, an outer surface of each of said optical fibers is carbon-coated, and at least a portion of each of said optical fibers is bent at a radius of curvature less than 30 mm.

15. A module according to claim 14, wherein at least a portion of each of said optical fibers included in said optical module is bent at a radius of curvature of 10 mm or less.

16. A component according to claim 1, wherein an increase in loss of said first optical fiber is 0.1 dB or less when bent at a radius of curvature of 30 mm.

17. A component according to claim 1, wherein an increase in loss of said first optical fiber is 0.1 dB or less when bent at a radius of curvature of 10 mm.

18. A module according to claim 13, wherein a loss at the bent portion of said first optical fiber is 0.1 dB or less.

19. An optical module comprising:
said first optical fiber included in said optical fiber component according to claim 1; and
a connector which is attached to at least one end portion of said first optical fiber and houses one of said first and second MFD conversion portions located at the end portions.

20. An optical module comprising:
an optical functional component;
a case which houses said optical functional component; and
an optical fiber component which includes a first optical fiber having one end optically connected to said optical functional component and a mode field diameter of 8 µm or less at an intermediate portion excluding two end portions, said optical fiber component being entirely or partly housed in said case while at least a portion of the intermediate portion of said first optical fiber is bent at a radius of curvature of less than 30 mm.

21. A module according to claim 20, wherein at least a portion of the intermediate portion of said first optical fiber is housed in said case while being bent at a radius of curvature of 10 mm or less.

22. A module according to claim 20, wherein an increase in loss at the bent portion of said first optical fiber is 0.1 dB or less.

23. A module according to claim 20, wherein said optical fiber component has a first MFD conversion portion for changing a mode field diameter at an end portion including one end face optically connected to said optical functional component.

24. A module according to claim 23, wherein said optical fiber component further comprises a first connector which is attached to the end portion, on which said first MFD conversion portion is formed, while said first MFD conversion portion is housed.

25. A module according to claim 23, wherein said first MFD conversion portion of said optical fiber component comprises a second optical fiber fusion spliced to an end face of said first optical fiber.

26. A module according to claim 23, wherein said optical fiber component comprises a core region extending along a predetermined axis and a cladding region formed on an outer surface of the core region.

27. A module according to claim 23, wherein said optical functional component includes an optical waveguide element, and a mode field diameter of an end face of said optical fiber component which is optically connected to said optical waveguide element coincides with a mode field diameter of said optical waveguide element or falls within an error range of ±10% with respect to the mode field diameter of said optical waveguide element.

28. A module according to claim 23, wherein said optical functional component includes a semiconductor laser, and the one end face of said optical fiber component has a mode field diameter enough to obtain a sufficient spatial coupling efficiency with respect to said semiconductor laser.

29. A module according to claim 28, wherein said optical functional component further comprises an optical coupling system for optically connecting said semiconductor laser to said optical fiber component with a sufficient spatial coupling efficiency.

30. A module according to claim 20, wherein said optical fiber component has a second MFD conversion portion for changing a mode field diameter at an end portion including the other end face opposing one end face optically connected to said optical functional component.

31. A module according to claim 30, wherein said optical fiber component further comprises a second connector which is attached to the end portion, in which said second MFD conversion portion is formed, while said second MFD conversion portion is housed.

32. A module according to claim 30, wherein said second MFD conversion portion of said optical fiber component comprises a second optical fiber fusion spliced to an end face of said first optical fiber.

33. A module according to claim 30, wherein said optical fiber component comprises a core region extending along a predetermined axis and a cladding region formed on an outer surface of the core region.

34. A module according to claim 30, wherein said optical functional component includes an optical waveguide element, and a mode field diameter of an end face of said optical fiber component which is optically connected to said optical waveguide element coincides with a mode field diameter of said optical waveguide element or falls within an error range of ± 10% with respect to the mode field diameter of said optical waveguide element.

35. A module according to claim 30, wherein said optical functional component includes a semiconductor laser, and the one end face of said optical fiber component has a mode field diameter enough to obtain a sufficient spatial coupling efficiency with respect to said semiconductor laser.

36. A module according to claim 28, wherein said optical functional component further comprises an optical coupling system for optically connecting said semiconductor laser to said optical fiber component with a sufficient spatial coupling efficiency.

37. An optical communication system comprising an optical fiber transmission line having a third connector attached to one end, and said optical module according to claim 30.

38. An optical communication system according to claim 37, wherein a fourth connector connected to said third connector is attached to the other end portion of said first optical fiber while said second MFD conversion portion is housed.

39. A module according to claim 20, wherein said optical fiber component has a first MFD conversion portion for changing a mode field diameter at an end portion including one end face optically connected to said optical functional component and a second MFD conversion portion for changing a mode field diameter at an end portion including the other end face opposing the one end face.

40. A module according to claim 39, wherein said optical fiber component further comprises a first connector which is attached to the end portion, in which said first MFD conversion portion is formed, while said first MFD conversion portion is housed.

41. A module according to claim 39, wherein said optical fiber component further comprises a second connector which is attached to the end portion, in which said second MFD conversion portion is formed, while said second MFD conversion portion is housed.

42. A module according to claim 39, wherein mode field diameters of one of two ends of said optical fiber component is larger than a mode field diameter of an intermediate portion between said first and second MFD conversion portions.

43. A module according to claim 39, wherein one of said first and second MFD conversion portions of said optical fiber component comprises a second optical fiber fusion spliced to an end face of said first optical fiber.

44. A module according to claim 39, wherein said optical fiber component comprises a core region extending along a predetermined axis and a cladding region formed on an outer surface of the core region, and
wherein an outer diameter of a portion of the core region which corresponds to at least one of said first and second MFD conversion portions increases or decreases in a tapered form along a longitudinal direction of said optical fiber component.

45. A module according to claim 39, wherein said optical functional component includes an optical waveguide element, and a mode field diameter of an end face of said optical fiber component which is optically connected to said optical waveguide element coincides with a mode field diameter of said optical waveguide element or falls within an error range of ±10% with respect to the mode field diameter of said optical waveguide element.

46. A module according to claim 39, wherein said optical functional component includes a semiconductor laser, and the one end face of said optical fiber component has a mode field diameter enough to obtain a sufficient spatial coupling efficiency with respect to said semiconductor laser.

47. A module according to claim 46, wherein said optical functional component further comprises an optical coupling system for optically connecting said semiconductor laser to said optical fiber component with a sufficient spatial coupling efficiency.

48. A module according to claim 44, wherein the core region of said first optical fiber of said optical fiber component is enlarged in a tapered form along the longitudinal direction of said first optical fiber by a thermal diffusion process at a portion corresponding to at least one of said first and second MFD conversion portions.

49. A module according to claim 44, wherein one of said first and second MFD conversion portions of said optical fiber component comprises a second optical fiber fusion spliced to said first optical fiber, and the fusion spliced portion has undergone a thermal diffusion process.

50. A module according to claim 20, wherein said optical functional component includes an optical waveguide element, and a mode field diameter of an end face of said optical fiber component which is optically connected to said optical waveguide element coincides with a mode field diameter of said optical waveguide element or falls within an error range of ± 10% with respect to the mode field diameter of said optical waveguide element.

51. A module according to claim 20, wherein said optical functional component includes a semiconductor laser, and the one end face of said optical fiber component has a mode field diameter enough to obtain a sufficient spatial coupling efficiency with respect to said semiconductor laser.

52. A module according to claim 51, wherein said optical functional component further comprises an optical coupling system for optically connecting the semiconductor laser to said optical fiber component with a sufficient spatial coupling efficiency.

53. A module according to claim 20, wherein said optical fiber component further comprises a carbon coat formed on the outer surface of said first optical fiber.

54. A module according to claim 39, wherein mode field diameters of two end faces of said optical fiber component differ from each other.

55. A module according to claim 20, wherein said optical fiber component comprises a plurality of optical fibers, at least one of the plurality of optical fibers having the same structure as that of said first optical fiber, and
wherein one end face of one of two optical fibers selected from the plurality of optical fibers and one end face of the other of the two optical fibers differ in mode field diameter.

56. A module according to claim 55, wherein two optical fibers selected from the plurality of optical fibers differ in length.

57. A module according to claim 20, wherein said optical fiber component comprises a plurality of optical fibers arranged on a predetermined plane, each of which has the same structure as that of said first optical fiber, and
wherein at least a portion of each of the plurality of optical fibers is bent at a predetermined radius of curvature.

58. An optical communication system comprising an optical fiber transmission line having a third connector attached to one end, and said optical module according to claim 39,
wherein a mode field diameter of an end face of said optical fiber component which is optically connected to said optical fiber transmission line coincides with a mode field diameter of said optical fiber transmission line or falls within a range of ±10% with respect to the mode field diameter of said optical fiber transmission line.

59. A system according to claim 58, wherein a fourth connector connected to said third connector is attached to the other end portion of said first optical fiber while said second MFD conversion portion is housed.

60. An optical module comprising a plurality of optical functional components each having a same structure as that of said optical functional component according to claim 20, and one or more optical fiber components each having the same structure as that of said optical fiber component according to claim 20,
wherein at least one of said plurality of optical functional components includes an optical waveguide element, and
wherein a mode field diameter of an end face of said optical fiber component which is optically connected to said optical waveguide element coincides with a mode field diameter of said optical waveguide element or falls within a range of ±10% with respect to the mode field diameter of said optical waveguide element.

61. An optical communication system comprising an optical fiber transmission line having a fifth connector attached to one end, and said optical module according to claim 60,
wherein a mode field diameter of an end face of said optical fiber component which is optically connected to said optical fiber transmission line coincides with a mode field diameter of said optical fiber transmission line or falls within a range of +10% with respect to the mode field diameter of said optical fiber transmission line.

62. A system according to claim 61, wherein a fourth connector connected to said fifth connector is attached to the other end portion of said optical fiber component while said second MFD conversion portion is housed.

63. An optical module comprising a plurality of optical functional components each having a same structure as that of said optical functional component according to claim 20, and one or more optical fiber components each having the same structure as that of said optical fiber component according to claim 20,
wherein at least one of said plurality of optical functional components includes a semiconductor laser, and
wherein one end face of said optical fiber component which is optically connected to said semiconductor laser has a mode field diameter enough to obtain a sufficient spatial coupling efficiency with respect to said semiconductor laser.

64. An optical communication system comprising an optical fiber transmission line having a fifth connector attached to one end, and said optical module according to claim 63,
wherein a mode field diameter of an end face of said optical fiber component which is optically connected to said optical fiber transmission line coincides with a mode field diameter of said optical fiber transmission line or falls within a range of ±10% with respect to the mode field diameter of said optical fiber transmission line.

65. A system according to claim 64, wherein a fourth connector connected to said fifth connector is attached to the other end portion of said optical fiber component while said second MFD conversion portion is housed.
